# EUROPÄISCHE PATENTSCHRIFT

(11) **EP 1 044 786 B1**
(45) Veröffentlichungstag und Bekanntmachung des Hinweises auf die Patenterteilung: **04.09.2002**
(21) Anmeldenummer: 00106685.1
(22) Anmeldetag: 29.03.2000
(51) Int. Cl.: B29C 51/44, B29C 51/26, B29C 33/44, B29C 33/30

(54) **Formwerkzeug**
Moulding tool
Outil de moulage

(30) Priorität: 16.04.1999 DE 19917224
(43) Veröffentlichungstag der Anmeldung: 18.10.2000
(73) Patentinhaber: Adolf Illig Maschinenbau GmbH & Co. KG, 74081 Heilbronn (DE)
(72) Erfinder: Trautwein, Herbert, 71737 Kirchberg (DE); Hinterkopf, Manfred, 74388 Talheim (DE)

(56) Entgegenhaltungen:
- DE-A- 4 434 511
- DE-C- 19 532 571
- DE-U- 29 814 479
- US-A- 4 552 522
- PATENT ABSTRACTS OF JAPAN vol. 005, no. 135 (M-085), 27. August 1981 (1981-08-27) & JP 56 069131 A (SEKISUI PLASTICS CO LTD), 10. Juni 1981 (1981-06-10)

## Beschreibung

Die Erfindung betrifft ein Formwerkzeug zum Tiefziehen von Behältern aus einer erwärmten thermoplastischen Kunststofffolie nach der Gattung des Hauptanspruches. Ein solches Formwerkzeug wird in die Formstation einer Thermoformmaschine eingebaut. Die Verfahrensabläufe des Werkzeuges werden als bekannt vorausgesetzt und sind z. B. in der DE-OS 21 45 250 näher beschrieben. Bei dem Werkzeug handelt es sich um ein nur formendes oder um ein kombiniert formendes und stanzendes Werkzeug, wobei das Stanzen in Form eines Durchfallschnittes oder über ein Stanzmesser erfolgen kann.

Die Erfindung betrifft insbesondere die Verbindung zwischen den einzelnen Auswerferstangen, die die Formböden der Formnester tragen und der die Auswerferstangen verbindende Auswerferplatte, über die die Formböden von einer Antriebseinrichtung axial verschoben werden können. In bekannter Weise werden die einzelnen Auswerferstangen mit der Auswerferplatte verschraubt oder über Sicherungsringe oder ähnliche Verbindungselemente befestigt (DE-44 34 511 A 1). Zum Lösen der Verbindung Auswerferstange - Auswerferplatte sind Werkzeuge erforderlich, der Zeitaufwand ist entsprechend groß. Das Lösen wird teilweise durch benachbarte Stangen, wenn z. B. mehrreihige Formwerkzeuge vorliegen, bzw. durch Bauteile der Vorrichtung behindert. Der Ausbau zusätzlicher Auswerferstangen allein zur Schaffung eines Zuganges zu der zu lösenden Verbindung kann ggf. erforderlich sein.

Es sind Formwerkzeuge bekannt, bei denen durch Tausch aller Formböden Behälter mit anderer Gestaltung gefertigt werden können, so daß kein eigenes, teures Formwerkzeug erforderlich ist, lediglich ein Satz neuer Formböden. Ein solches Umrüsten des Formwerkzeuges in eingebautem Zustand sollte sehr rasch vorgenommen werden können, weil die teuere Formmaschine in dieser Zeit steht. Das Umrüsten kann dadurch erfolgen, daß man die einzelnen Formböden tauscht, das heißt, die Verbindung Formboden/Auswerferstange muß jeweils gelöst werden. Im deutschen Gebrauchsmuster 298 14 479 wird hierzu vorgeschlagen, dies über eine Kupplungseinrichtung mit Hilfswerkzeug zu ermöglichen. Je nach Platzproblemen, z. B. Ausfahrweg der Formböden aus dem

Formnest, Konizität der Behälterwand und damit Spalt zwischen Formboden und Formnest, kann die Zugänglichkeit der Kupplungseinrichtung sehr eingeengt sein. Spezielle teure Werkzeuge werden dann erforderlich, um die Kupplung zu betätigen, wobei mit diesen Werkzeugen im Bereich der Formböden hantiert werden muß. Bei diesen Formböden handelt es sich um formgebende Teile mit hoher Genauigkeit und bester Oberflächenbeschaffenheit. Die Gefahr der Beschädigung dieser Formböden, z. B. durch Kratzer, ist beim Hantieren mit Werkzeugen immer gegeben, was hohe Kosten und Stillstandszeiten der Maschine zur Folge hat.

Der Erfindung liegt die Aufgabe zugrunde, das Formwerkzeug so zu gestalten, daß ein rascher Ausbau aller oder einzelner Formböden auch dann gegeben ist, wenn die Verbindungsstelle zu den Auswerferstangen wegen den räumlichen Gegebenheiten schlecht zugänglich ist. Ein Hantieren mit Werkzeugen aller Art im Bereich der Formböden und damit die Gefahr von deren Beschädigung sollte verhindert sein. Die gefundene Lösung sollte die über die Auswerferstangen erfolgende Kühlung der Formböden nicht beeinträchtigen bezüglich Funktion und Dichtheit. Sie sollte auch bei nicht rotationssymmetrischen Formböden Anwendung finden können, bei denen es auf die richtige Einbaulage zum Formnest ankommt, wie es z. B. bei Formwerkzeugen für Margarinedosen mit ovaler Gestalt der Fall ist. In Weiterbildung der Erfindung sollte es möglich sein, alle Formböden auf einmal zu entriegeln, so dass sie alle sofort von Hand ohne weitere Maßnahmen entnommen werden können.

Zur Lösung der Aufgabe wird vorgeschlagen, die Verbindungsstelle zwischen Auswerferstange und Auswerferplatte mit rasch lösbaren Kupplungselementen zu versehen, die von Hand oder mit einfachen Hilfsmitteln bzw. über eine automatische Betätigungseinrichtung einzeln oder gemeinsam betätigt werden können.

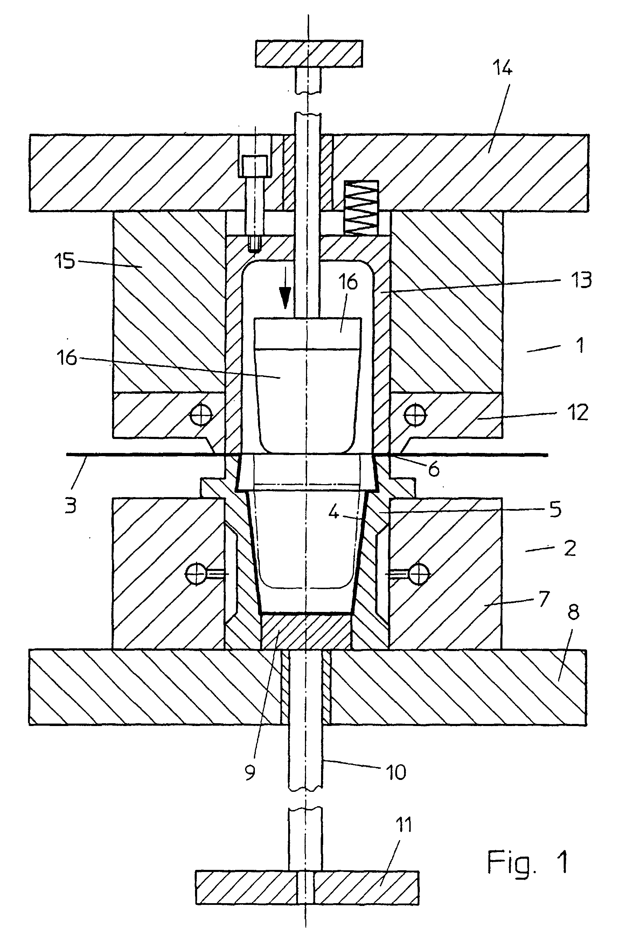

Ausführungsbeispiele solcher Kupplungselemente sind anhand der Figuren 1 bis 7 näher beschrieben. Es zeigt:
- Fig 1:: einen Querschnitt durch das Formwerkzeug
- Fig. 2-7:: verschiedene Ausführungsformen einer Kopplungseinrichtung zwischen Auswerferstange und Auswerferplatte

Das Formwerkzeug besteht aus einem Oberteil 1 und einem Unterteil 2, die relativ zueinander verschiebbar sind und im Zusammenwirken eine Folie 3 zu einem Behälter 4 tiefziehen und diesen ggf. ausstanzen. Hierzu weist das Unterteil 2 auf den eigentlichen Formansatz 5 mit einer Schnittkante 6, die Aufnahme 7 und die Grundplatte 8 sowie je Formnest einen höhenbeweglichen Formboden 9, der an einer Auswerferstange 10 sitzt. Alle Auswerferstangen 10 sind mit einer Auswerferplatte 11 verbunden, die über eine nicht dargestellte Betätigungseinrichtung verschiebbar ist zu den Formeinsätzen 5. Das Oberteil 1 setzt sich zusammen aus der Matrize 12, den Niederhaltern 13, der Kopfplatte 14, der Zwischenplatte 15 und einem Streckhelfer 16 pro Formnest. Formwerkzeuge mit mehreren Formnestern in einer Reihe und mit mehreren Reihen sind bekannt.

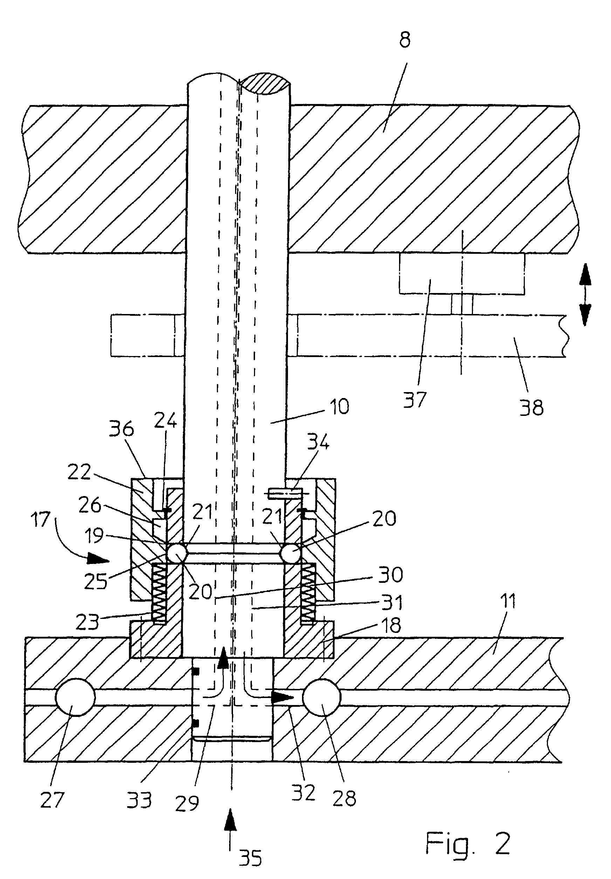

Die Figur 2 zeigt eine Kopplungseinrichtung 17 zwischen Auswerferstange 10 und Auswerferplatte 11 bestehend aus einer fest mit der Auswerferplatte 11 verbundenen Aufnahme 18 mit horizontalen Querbohrungen 19 und darin verschiebbaren Kugeln 20. Diese Kugeln 20 treffen innen auf eine Nut 21 in der Auswerferstange 10. Um die Aufnahme 18 herum ist eine Schiebehülse 22 angeordnet. Sie wird über eine Feder 23 nach oben gedrückt und von einem in der Aufnahme 18 befestigten Sicherungsring 24 gehalten. Mit einem Absatz 25 drückt sie in oberer Stellung auf die Kugeln 20, in nach unten gedrückter Stellung treten die Kugeln 20 nach außen in die Nut 26 und geben so die Verriegelung Aufnahme 18/Auswerferstange 10 frei.

In der Auswerferplatte 11 sind Kühlwasserbohrungen 27, 28 zur Zufuhr von Kühlwasser angeordnet, das über Bohrungen 29 bis 32 bis zum Formboden 9 geführt wird. Dichtungen 33 verhindern einen Austritt von Kühlwasser. Wenn die Formböden 9 verdrehgesichert sein müssen, ist dies auf einfache Weise möglich, in dem ein Stift 34 in der Auswerferstange 10 angeordnet ist, der in eine entsprechende Nut in der Aufnahme 18 eingreift.

Das Verschieben der Schiebehülse 22 kann je nach Zugänglichkeit von Hand erfolgen. In diesem Fall müsste jede Verbindungsstelle einzeln gelöst werden. In Weiterbildung der Erfindung wird vorgeschlagen, das Lösen aller Verbindungen auf einmal vorzunehmen. Dazu wird die Hubeinrichtung für die Auswerferplatte 11, dargestellt durch den Pfeil 35, so ausgebildet, dass sie zusätzlich zu ihrem normalen Arbeitshub einen Zusatzhub ausführen kann, der bewirkt, dass die Oberseiten 36 aller Schiebehülsen 22 gegen die Unterseite der Grundplatte 8 gedrückt und diese Schiebehülsen 22 soweit verschoben werden, bis die Kugeln 20 in die Nut 26 eintreten können.

Anstelle einer entsprechenden Gestaltung des Antriebes 35 kann auch ein zusätzlicher Antrieb 37 an der Grundplatte 8 angeordnet werden, der eine Betätigungsplatte 38 höhenmäßig verschieben kann, wobei diese Betätigungsplatte 38 auf die Oberseite 36 trifft und die Schiebehülsen 22 entsprechend verschiebt. Diese Ausführungsform ist in der Figur 2 strichpunktiert angedeutet.

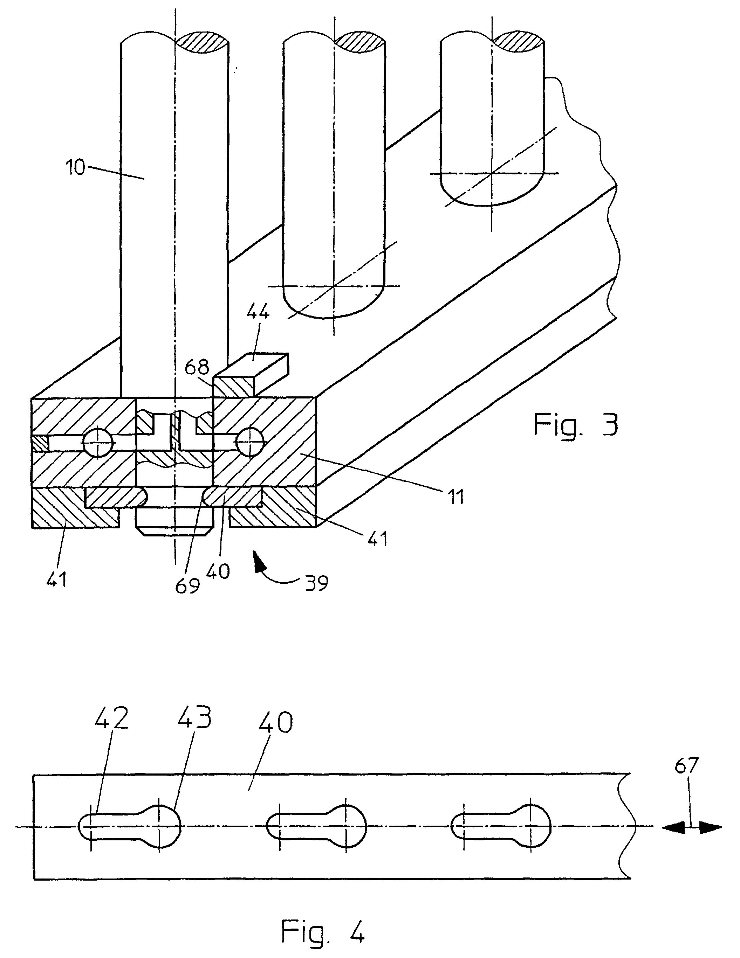

Die Figuren 3 und 4 zeigen eine andere Gestaltung der Kopplungseinrichtung. In diesem Fall besteht die Kopplungseinrichtung 39 aus einer horizontal verschiebbaren Verriegelungsplatte 40, geführt in Führungsleisten 41, die an der Auswerferplatte 11 sitzen. Die unteren Bereiche der Auswerferstangen 10 weisen eine Nut 69 auf, in der eine Aussparung 42 in der Verriegelungsplatte 40 eingreift. Diese Aussparung 42 geht über in einen vergrößerten Bereich 43, der größer ist als der Außendurchmesser der Auswerferstangen 10 im unteren Bereich. Durch horizontale Verschiebung von Hand oder durch einen als Pfeil 67 dargestellten Antrieb kann die Verriegelungsplatte 40 zwischen einer Verriegelungsstellung und einer Lösestellung verschoben werden. Eine Verdrehsicherung und Zentrierung der Auswerferstangen 10 kann in Form einer Abflachung 68 und einer Zentrierplatte 44 geschaffen werden.

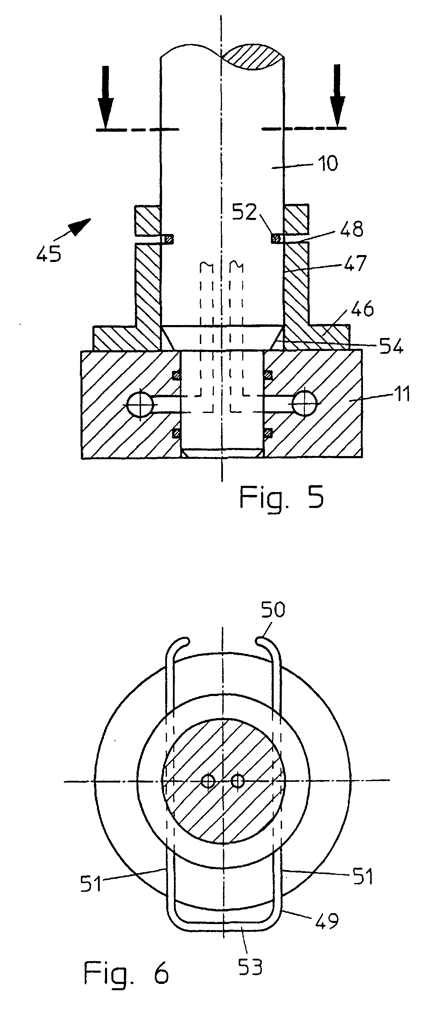

Die Kopplungseinrichtung 45 gemäß den Figuren 5 und 6 besteht aus einer an der Auswerferplatte 11 befestigten Haltebuchse 46 mit einer zentralen Bohrung 47 entsprechend dem Außendurchmesser der Auswerferstange 10. Gegenüberliegend sind zwei Schlitze 48 senkrecht zu der zentralen Bohrung 47 eingefräst und eine gebogene Spezialfeder 49 aus Federdraht ist in die Schlitze 48 eingelegt und so an den Enden 50 umgebogen, dass sie nicht herausfallen kann. Die beiden Schenkel 51, verbunden über den Steg 53, liegen an der Innenseite jedes Schlitzes 48 an. Jede Auswerferstange 10 ist ebenfalls gegenüberliegend mit einem Schlitz 52 versehen, in die die beiden Schenkel 51 der Spezialfeder 49 eingreifen. Eine Schräge 54 am Bund der Auswerferstange 10 ermöglicht das Einführen der Auswerferstange 10 in die Haltebuchse 46, da diese Schräge 54 die beiden Schenkel 51 spreizt. Wenn die Schenkel 51 in die Schlitze 52 eingerastet sind genügt eine Drehung der Auswerferstange 10 um 90°, um die Entkopplung herbeizuführen und die Auswerferstange 10 einschließlich des Formbodens 9 von Hand entnehmen zu können. Das Verdrehen der Auswerferstange10 erfolgt durch Drehen des Formbodens 9 von Hand. Das bedeutet, dass bei geöffnetem Formwerkzeug alle Formböden 9 einfach durch Drehen um 90° gelöst und axial herausgezogen werden können. Eine Zentrierung der Formböden 9 mit Verdrehsicherung ist bei dieser Bauart ebenfalls gegeben.

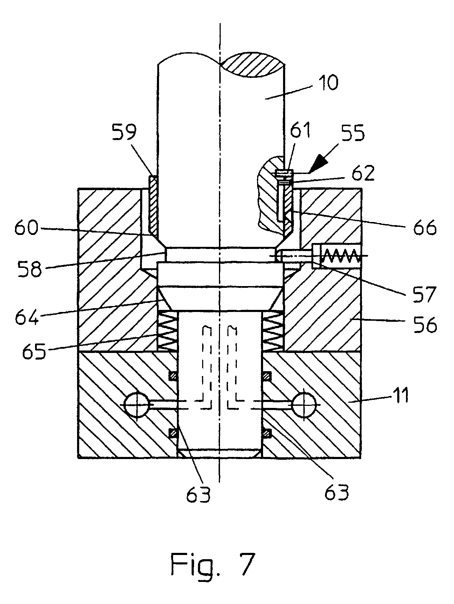

Die Figur 7 zeigt eine Kopplungseinrichtung 55, bei der zur Verrastung und Entrastung lediglich eine axiale Verschiebung der Auswerferstange 10 erforderlich ist. Hierzu sitzt auf der Auswerferplatte 11 eine Aufnahme 56 für den unteren Bereich der Auswerferstange 10 mit einem horizontal angeordneten gefederten Stift 57. Dieser trifft in eine Nut 58 in der Auswerferstange 10 und hält diese in verrasteter Stellung fest. Auf der Auswerferstange 10 ist - axial verschiebbar - eine Schiebehülse 59 angeordnet. Sie weist unten eine Schräge 60 auf. Ihre Lage nach unten bzw. oben ist durch Stifte 61, 62 begrenzt. Die Auswerferstange 10 hat unten einen Bund 63, mit dem sie in der Auswerferplatte 11 sitzt. Der Übergang des Bundes 63 in den Außendurchmesser der Auswerferstange 10 erfolgt über einen Konus 64, an dessen Schulter eine Feder 65 anliegt, die sich andererseits an der Auswerferplatte 11 abstützt und so die Auswerferstange 10 nach oben drückt, bis die Nut 58 an dem Stift 57 anliegt. Aus dieser in Figur 7 dargestellten verriegelten Lage führt man die Entriegelung dadurch herbei, daß man den Formboden 9 und damit die Auswerferstange 10 soweit gegen die Kraft der Feder 65 nach unten drückt, bis die Schiebehülse 59 mit ihrer Schräge 60 den Stift 57 nach außen gedrückt hat und dessen Spitze in einer Kerbe 66 in der Schiebehülse 59 zu liegen kommt. Beim Herausziehen der Auswerferstange 10 aus der Aufnahme 56 verhindert die dabei nach unten gleitende Schiebehülse 59, daß der Stift 57 wieder in die Nut 58 einrastet. Eine solche Verrastung kann erst wieder erfolgen, nachdem die Auswerferstange 10 herausgezogen und erneut eingesteckt wurde, weil dann der Konus 64 den Stift 57 zurückschiebt und die Schiebehülse 59 vom Stift 57 nach oben geschoben wird.

## Patentansprüche

1. Formwerkzeug zum Tiefziehen von Behältern aus einer erwärmten thermoplastischen Kunststofffolie, bestehend aus zwei Formhälften (1,2), wobei eine Formhälfte (2) die Tiefziehformen trägt, mit einem in jedem Formeinsatz (5) angeordneten Formboden (9), der mit einer Auswerferstange (10) verbunden ist und bei dem alle Auswerferstangen (10) an einer verschiebbaren Auswerferplatte (11) sitzen, **gekennzeichnet durch** eine an jeder Verbindungsstelle Auswerferstange (10)/Auswerferplatte (11) sitzende Kopplungseinrichtung (17, 39, 45, 55) mit Verrastungselementen (20, 40, 49, 57), die **durch** eine Drehung von maximal 90° oder eine lineare Verschiebung der Formböden (9) mit der daran befestigten Auswerferstange (10) bzw. **durch** eine lineare Verschiebung von Bauteilen (22, 40) der Kopplungseinrichtung (17, 39) in bzw. außer Eingriff gebracht werden können.

2. Formwerkzeug nach Anspruch 1, **dadurch gekennzeichnet, dass** die Verrastungselemente aus horizontal verschiebbaren, in einer Aufnahme (18) gehaltenen Kugeln (20) besteht, die durch eine gefederte Schiebehülse (22) mit einer Nut (26) und einem Absatz (25) in bzw. außer Eingriff mit einer Nut (21) in der Auswerferstange (10) gebracht werden können.

3. Formwerkzeug nach Anspruch 2, **gekennzeichnet durch** eine von Hand oder von einem Antrieb (37) bewegbare Betätigungsplatte (38) zur gemeinsamen Verschiebung und damit Entkopplung aller Verriegelungselemente (17).

4. Formwerkzeug nach Anspruch 1, **gekennzeichnet durch** eine senkrecht zur Axialrichtung der Auswerferstange (10) verschiebbare, an der Auswerferplatte (10) angeordneten Verriegelungsplatte (40) mit Schlitzen (42), die in und außer Eingriff gebracht werden können mit einer Nut (41) in jeder Auswerferstange (10).

5. Formwerkzeug nach Anspruch 4, **gekennzeichnet durch** einen Antrieb (67) zur Verschiebung der Verriegelungsplatte (40).

6. Formwerkzeug nach Anspruch 1, **dadurch gekennzeichnet, dass** die Verrastungselemente aus einer Spezialfeder (49) mit zwei verbundenen Schenkeln (51) besteht, die in je einem Schlitz (48) in einer an der Auswerferplatte 11 befestigten Haltebuchse (46) gehalten sind und die im Eingriff mit je einem Schlitz (52) an der Auswerferstange (10) stehen.

7. Formwerkzeug nach Anspruch 1, **dadurch gekennzeichnet, dass** ein Verrastungselement aus einem in einer Aufnahme (56) horizontal verschiebbaren, gefederten Stift (57), besteht, der in eine Nut (58) in der Auswerferstange (10) eingreift, wobei jede Auswerferstangen (10) eine axial bewegliche Schiebehülse (59) mit einer Kerbe (66) trägt, die bei Axialverschiebung der Auswerferstange (10) gegen eine zwischen Auswerferstange (10) und Auswerferplatte (11) angeordnete Feder (65) in Eingriff mit der Spitze des Stiftes (57) kommt.

## Claims

1. Mould tool for deep-drawing containers from a heated thermoplastic synthetic material film, consisting of two mould halves (1, 2), wherein one mould half (2) carries the deep-drawing moulds, with a mould base (9) which is arranged in each mould insert and connected with an ejector rod (10) and in which all ejector rods (10) are seated on a displaceable ejector plate (11), **characterised by** a coupling device (17, 39, 45, 55), which is seated at each connecting point of ejector rod (10) / ejector plate (11), with detent elements (20, 40), 49, 57) which can be brought into engagement by a rotation of at most 90° or a linear displacement of the mould bases (9) with the ejector rods (10) fastened thereto or out of engagement by a linear displacement of components (22, 40) of the coupling device (17, 39).

2. Mould tool according to claim 1, **characterised in that** the detent elements consist of horizontally displaceable balls (20) which are retained in a receptacle (18) and which can be brought by a spring-loaded sliding sleeve (22) with a groove (26) and a projection (25) into or out of engagement with a groove (21) in the ejector rod (10).

3. Mould tool according to claim 2, **characterised by** an actuating plate (38), which is movable manually or by a drive (37), for the common displacement and thus decoupling of all locking elements (17).

4. Mould tool according to claim 1, **characterised by** a locking plate (40), which is displaceable perpendicularly to the axial direction of the ejector rod (10) and arranged at the ejector plate (10), with slots (42) which can be brought into and out of engagement with a groove (41) in each ejector rod (10).

5. Mould tool according to claim 4, **characterised by** a drive (67) for displacing the locking plate (40).

6. Mould tool according to claim 1, **characterised in that** the locking elements consist of a special spring (49) with two connected limbs (51), which are each held in a slot (48) in a retaining bush (46) fastened to the ejector plate (11) and which are each disposed in engagement with a respective slot (52) at the ejector rod (10).

7. Mould tool according to claim 1, **characterised in that** a detent element consists of a spring-loaded pin (57), which is horizontally displaceable in a recess (56) and which engages in a groove (58) in the ejector rod (10), wherein each ejector rod (10) carries an axially movable sliding sleeve (59) with a notch (66), which comes into engagement with the tip of the pin (57) on axial displacement of the ejector rod (10) against a spring (65) arranged between ejector rod (10) and ejector plate (11)

## Revendications

1. Outil de moulage pour l'emboutissage profond de récipients fabriqués à partir d'un film de matière thermoplastique chauffé, composé de deux moitiés de moule (1, 2), dont une moitié de moule (2) porte les moules d'emboutissage profond, et d'un fond de moule (9) placé dans chaque garniture de moule (5), ce fond étant relié à une tige d'éjection (10) et toutes les tiges d'éjection (10) étant montées sur une plaque d'éjection (11) coulissante,
**caractérisé par**
une installation de couplage (17, 39, 45, 55) reliée à chaque point de liaison de tige d'éjection (10)/plaque d'éjection (11), cette installation comportant des éléments d'accrochage (20, 40, 49, 57) qui peuvent être mis en prise ou hors de prise par une rotation maximale de 90° ou un coulissement linéaire des fonds de moules (9) avec la tige d'éjection (10) fixée à celui-ci, ou par un coulissement linéaire des pièces (22, 40) de l'installation de couplage (17, 39).

2. Outil de moulage selon la revendication 1,
**caractérisé en ce que**
les éléments d'accrochage sont constitués par des billes (20) placées dans un logement (18) et coulissant horizontalement, ces billes pouvant être mises par un manchon coulissant (22) à ressort ayant une rainure (26) et un décrochement (25) en prise ou hors de prise avec une rainure dans la tige d'éjection (10).

3. Outil de moulage selon la revendication 2,
**caractérisé par**
une plaque d'actionnement (38) mobile à la main ou par un moyen d'entraînement (37) pour coulisser en commun et ainsi découpler tous les éléments de verrouillage (17),

4. Outil de moulage selon la revendication 1,
**caractérisé par**
une plaque de verrouillage (40) montée sur la plaque d'éjection (10), coulissant dans la direction axiale de la tige d'éjection (10), cette plaque de verrouillage ayant des fentes (42) qui peuvent être mises en prise ou hors de prise avec une rainure (41) de chaque tige d'éjection.

5. Outil de moulage selon la revendication 4,
**caractérisé par**
un moyen d'entraînement (67) pour coulisser la plaque de verrouillage (40).

6. Outil de moulage selon la revendication 1,
**caractérisé en ce que**
les éléments d'accrochage sont formés d'un ressort spécial (49) à deux branches (51) tenues chaque fois dans une fente (48) dans une douille de fixation (46) fixée à la plaque d'éjection (11), et ces branches sont en prise chacune avec une fente (52) de la tige d'éjection (10).

7. Outil de moulage selon la revendication 1,
**caractérisé en ce qu'**
un élément d'accrochage est formé d'une broche (57) à ressort coulissant horizontalement dans un logement (56), cette tige pénétrant dans une rainure (58) de la tige d'éjection (10), et chacune des tiges d'éjection (10) comporte un manchon coulissant (59) mobile axialement, muni d'une encoche (66) qui, lors du coulissement axial de la tige d'éjection (10) contre l'action d'un ressort (65) placé entre la tige d'éjection (10) et la plaque d'éjection (11), vient en prise avec la pointe de la broche (57).
